Europäisches Patentamt

European Patent Office

Office européen des brevets

(19)

(11) Veröffentlichungsnummer: **0 209 723**
**B1**

(12) **EUROPÄISCHE PATENTSCHRIFT**

(45) Veröffentlichungstag der Patentschrift: **17.10.90**

(51) Int. Cl.⁵: **B 60 J 9/02**

(21) Anmeldenummer: **86108243.6**

(22) Anmeldetag: **16.06.86**

(54) Notausstieg bei Omnibussen.

(30) Priorität: **26.07.85 DE 3526881**

(43) Veröffentlichungstag der Anmeldung:
**28.01.87 Patentblatt 87/05**

(45) Bekanntmachung des Hinweises auf die
Patenterteilung:
**17.10.90 Patentblatt 90/42**

(84) Benannte Vertragsstaaten:
**AT BE DE FR IT NL SE**

(56) Entgegenhaltungen:
**EP-A-0 061 198**
**FR-A-2 323 859**
**GB-A- 325 333**
**GB-A- 374 242**
**US-A-2 697 003**

(73) Patentinhaber: **MAN Nutzfahrzeuge
Aktiengesellschaft
Dachauer Strasse 667 Postfach 50 06 20
D-8000 München 50 (DE)**

(72) Erfinder: **Geyer, Ludwig
Wettersteinstrasse 10
D-8039 Puchheim (DE)**

Courier Press, Leamington Spa, England.

EP 0 209 723 B1

## Beschreibung

Die Erfindung betrifft einen Notausstieg im Heck von Omnibussen, mit im Heckteil angeordnetem Motor und einer unter dem Heckfenster befindlichen, den Motorraum verschließenden Heckklappe.

Erfahrungen aus der Vergangenheit, vor allem Geschehnisse in jüngster Zeit, haben uns bewußt gemacht, daß es um Fluchtwege bei Omnibusungslücken schlecht bestellt ist und unzureichende Sicherheitsmaßnahmen schon viele Tote und Verletzte gefordert haben. Im wesentlichen beschränken sich die heute bekannten Maßnahmen darauf, Fluchtwege durch Einschlagen der Fensterscheiben zu schaffen. Das Panikverhalten der Fahrgäste ist hierbei kaum berücksichtigt. Außerdem bringt das Durchwinden durch eine gebrochene und zersplitterte Fensterscheibe Verletzungen mit sich. Eine weitere erhebliche Verletzungsgefahr, insbesondere für ältere Leute, Kranke, aber auch sonst körperlich Untrainierte, entsteht beim Sprung aus dem Fenster aus einer immerhin für den Personenkreis beträchtlichen Höhe. Ein gewisses Panikverhalten läßt hier auch einen Stau am Fluchtweg entstehen, so daß ein zu langsames Verlassen des Omnibusses sich für nachfolgende Fahrgäste verhängnisvoll auswirken kann.

Aus der GB—A—374242 ist eine Einrichtung als Notausstieg eines Omnibusses bekannt. Hier wird mit Öffnen einer Tür oder eines Fenstens gleichzeitig eine Leiter in Ausstiegsposition gebracht, wobei eine Leiter in einer Paniksituation keine optimale Hilfe für den Ausstieg darstellt.

Die Erfindung machst es sich zur Aufgabe, einen neuen Fluchstweg mit geringer Verletzungsgefahr zu suchen.

Dies wird erfindungsgemäß dadurch gelöst, daß das Heckfenster entriegelbar und in einen geöffneten Zustand bringbar und davon abhängig die Heckklappe des Motorraumes nach außen in eine Schräglage zur Fensteröffnung schwenkbar ist. Erfahrungsgemäß ist bei Busungslücken in den meisten Fällen zuerst die vordere Seite, also das Fehrerhaus mit den nachfolgenden Sitzreihen, betroffen. Hier entsteht dann auch zunächst durch Reibung und Verschmoren eine große Hitze, die schnell einen Brand nach sich zieht. Dies berücksichtigt die vorliegende Erfindung und bietet den Fluchtweg durch das Heckfenster an. Wesentlich dabei ist auf jeden Fall, daß auf das Einschlagen der Scheibe verzichtet wird, vielmehr nur ein einziger Handgriff nötig ist, um das Fenster herabzudrehen oder auszuwerfen. Sofort steht ein breiter Fluchtweg zur Verfügung, der ohne Verletzungsfahr voll durchgängig ist.

Nach einer Weiterbildung der Erfindung ist mit dem Öffnen des Heckfensters ein gleichzeitiges, automatisches Ausschwenken der Heckklappe verbunden. Durch die Merkmale dieses Anspruches wird der große Wert dieser Erfindung noch optimiert, indem für das Ausschwenken der Heckklappe des Motorraumes keine weitere Handhabung notwendig ist, vielmehr sich diese automatisch ausschwenkt, nachdem der Befehl "Heckfenster öffnen" erfolgt ist. Nach anderen Weiterbildungen der Erfindung weist das Heckfenster einen Zugbügel auf, welcher gegen unzulässiges Öffnen verplombt ist. Der Zugbügel ermöglicht eine sehr einfache, natürliche Handhabung für das öffnen des Heckfensters bei Gefahr. Andererseits soll selbstverständlich das Öffnen des Heckfensters gegen Mißbrauch geschützt werden, insbesondere unter dem Aspekt, daß ein unnötig geöffnetes Heckfenster während der Fahrt erhebliche Gefahren mit sich bringt; um das zu verhindern, ist gemäß Anspruch 4 der Zugbügel verplombt.

Eine weitere Ausgestaltung der Erfindung zeigt, daß beim Öffnen des Heckfensters ein Elektroschalter betätigt wird, der mit einem elektromagnetischen Ventil verbunden ist, das wiederum auf ein Betätigungselement, z.B. einen Hydraulik oder Pneumatikzylinder, der zwischen Buswand und Heckklappe angeordnet ist, geschaltet ist. Diese Meßnahmen elektrisch-hydraulischer Art bewirken einerseits ein schnelles Reagieren der betroffenen Elemente und stellen andererseits ein kräftemäßig erhebliches Wirkpotential dar.

Vorteilhafterweise ist die Offenstellung des Heckfensters durch ein optisches oder akustisches Signal am Fahrerplatz erkennbar. Dies ist eine Maßnahme, um am Fahrerplatz sofort einen etwaigen Mißbrauch der Notausstiegenlage wahrzunehmen, um dann den Omnibus schnell zum Halten zu bringen.

Einer anderen Weiterbildung der Erfindung zufolge, werden das Heckfenster und die Heckklappe über einen Wärmesensor automatisch im Sinne der Sicherheit bei Überschreiten einer, die maximale klimatische Temperatur übersteigenden Temperatur betätigt.

Nach einem weiteren Sicherheitsaspekt sind die Öffnung des Heckfensters und die Schrägstellung der Heckklappe vom Fahrerplatz aus betätigbar. Hierbei ist der Umstand berücksichtigt, daß in vielen Fällen der Fahrer der erste ist, der einen nahenden Unfall bemerkt und eventuell schon vor dem Aufprall auf ein anderes Fahrzeug die heckseitige Ausstieghilfe betätigen kann. In weiterer sicherheitsprägender Ausgestaltung wird gezeigt, daß über eine Servoeinrichtung z. B. Hydraulikzylinder, das Heckfenster auch gegen erhabliche Widerstände durch leichte Betätigung des Zugbügels in Öffnungsrichtung bringbar ist, wobei auch die Heckklappe in Schrägstellung geht. Diese Variante in der Ausgestaltung der Erfindung berücksichtigt, daß es bei einem Unglück auch zum Verzug der entsprechenden Sicherheitsteile kommen kann oder auch daß diese durch Hilze quellen und nicht mehr von Hand betätigbar sind. Über die angezogenen Servoeinrichtungen können dann Krafte freigesetzt werden, die die der Handbetätigung wesentlich überteigen, und somit auch unglücksbedingte Widerstände überwunden werden können.

Weitere vorteile und Merkmale der Erfindung sind den Ansprüchen, der Beschreibung und den Zeichnungen zu entnehmen.

Die Erfindung ist in einem Ausführungsbeispiel dargestellt. Es zeigen:

Fig. 1 eine Seitenansicht eines Omnibusses mit heruntergezogener Heckscheibe und ausgeschwenkter Heckklappe.

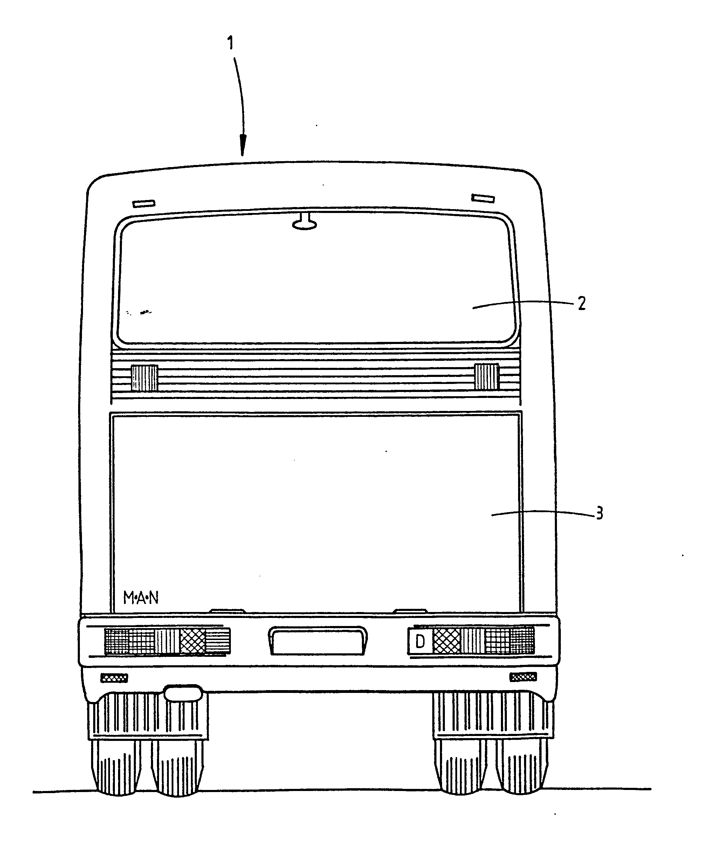

Fig. 2 eine Rückenansicht eines Omnibusses mit geschlossener Heckscheibe und geschlossener Heckklappe.

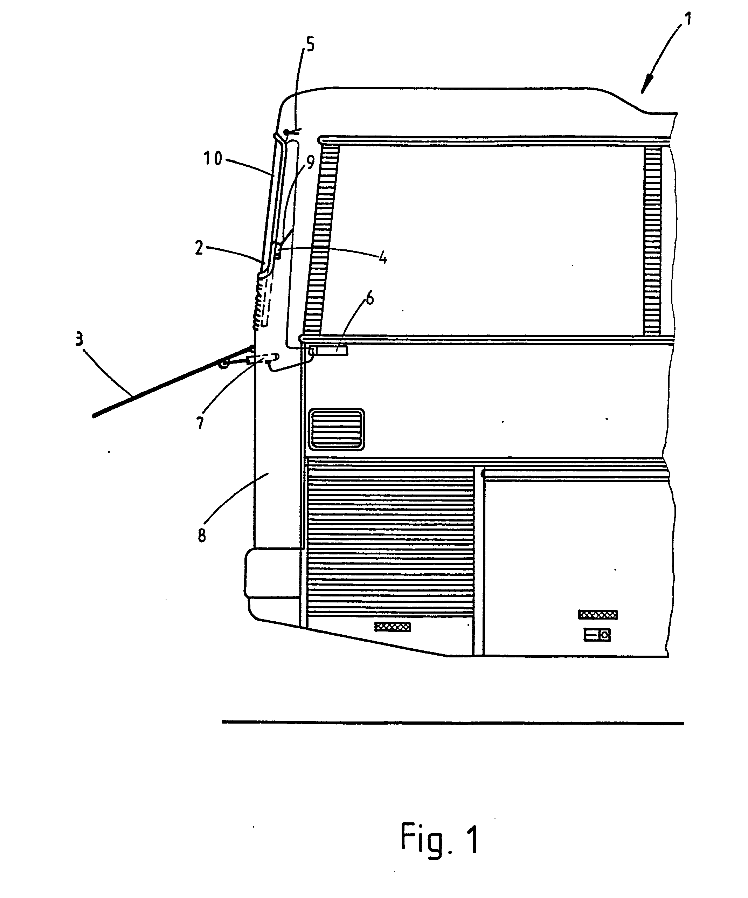

Figur 1 zeigt das Weckteil 1 eines Omnibusses mit einem heruntergezogenen Heckfenster 2, an dem im oberen Teil ein Zugbügel 4 befestigt ist, der im geschlossenen Zustand über einen Taster 9 mit einem Schalter 5 in Wirkverbindung steht. Der Schalter 5 beaufschlagt beim Lösen von Taster 9 ein Elektromagnetventil 6, das wiederum auf einen Zylinder 7 wirkt, der zwischen Buswand 8 und Heckklappe 3 angeordnet ist und der die Heckklappe 3 aus der den Motorraum schließenden Stellung in eine erfindungsgemäße Schrägstellung bringt. Es ist wichtig, daß der Fahrer sofort am Fahrerplatz bemerkt, wenn die Heckscheibe geöffnet ist, so daß er im Falle eines Mißbrauchs oder einer Gefahr schnell reagieren kann. Es ist wesentlich, das System so auszugestalten, daß es im Gefahrenfall, ggf. auch ohne menschliches Zutun, wirksam wird. Das würde z. B. im Brandfall gescheben, wenn ein Wärmesensor eine Erwärmung wahrnimmt, die über den normalen klimatischen Temperaturen liegt, und der Sensor dann selbtätig den Notausstieg öffnet. Desweiteren ist Bestandteil einer Weiterbindung der Erfindung, daß auch Verklemmungen oder Verwindungen von Heckfenster, Rahmen und Heckklappe durch Zwischenschaltung einer Servoeinrichtung, deren Kräfte die des Menschen wesentlich übersteigen, überwunden werden können und somit die Sicherheit des Ausstiegs auch unter diesen extremen Bedingungen gewährleistet ist.

Nach einer anderen Variante der Erfindung wird das Heckfenster 2 in (nicht in der Figur gezeigten) Lippendichtungen gehalten, die eine Performierung aufweisen können und mittels Betätigung des Zugbügels 4 leicht abreißbar sind. Dann ist im Gefahrenfall die Scheibe durch leichten Druck schnell abzuwerfen.

Bezugszeichenliste
1 Omnibus
2 Heckfenster
3 Heckklappe
4 Zugbügel
5 Elektroschalter
6 Elektromagnetventil
7 Betätigungselement (Hydraulik— oder Pneumatikzylinder)
8 Buswand
9 Taster
10 Fensteröffnung

## Patentansprüche

1. Notausstieg im Hock von Omnibussen mit im Heckteil angeordnetem Motor und einer unter dem Heckfenster (2) befindlichen, den Motorraum verschließenden Heckklappe (3), dadurch gekennzeichnet, daß das Heckfenster (2) entriegelbar und in einen geöffneten Zustand bringbar und davon abhängig die Heckklappe (3) des Motorraumes nach außen in eine Schräglage zur Fensteröffnung (10) schwenkbar ist.

2. Notausstieg nach Anspruch 1, dadurch gekennzeichnet, daß mit dem Öffnen des Heckfensters (2) ein gleichzeitiges und automatisches Ausschwenken der Heckklappe (3) verbunden ist.

3. Notausstieg nach Anspruch 1 oder 2, dadurch gekennzeichnet, daß das Heckfenster (2) einen Zugbügel (4) aufweist.

4. Notausstieg nach den Ansprüchen 1 bis 3, dadurch gekennzeichnet, daß der Zugbügel (4) gegen unzulässiges Öffnen verplombt ist.

5. Notausstieg nach einem oder mehreren der Ansprüche 1 bis 4, dadurch gekennzeichnet, daß beim Öffnen des Heckfensters (2) ein Elektroschalter (5) betätigt wird, der mit einem Elektromagnetventil (6) verbunden ist, das wiederum auf ein Betätigungselement (7), z. B. einen Hydraulik- oder Pneumatikzylinder, der zwischen Buswand (8) und Heckklappe (8) angeordnete ist, geschaltet ist.

6. Notausstieg nach einem oder mehreren der Ansprüche 1 bis 5, dadurch gekennzeichnet, daß die Öffenstellung des Heckfensters (2) durch ein optisches oder akustisches Signal am Fahrerplatz erkennbar ist.

7. Notausstieg nach einem oder mehreren der Ansprüche 1 bis 6, dadurch gekennzeichnet, daß das Heckfenster (2) und die Heckklappe (3) über einen Wärmesensor im Sinne der Sicherheit automatisch bei Überschreiten einer die maximale klimatische Temperatur übersteigenden Temperatur betätigt werden.

8. Notausstieg nach einem oder mehreren der Ansprüche 1 bis 7, dadurch gekennzeichnet, daß die Öffnung des Heckfensters (2) und die Schrägstellung der Heckklappe (3) vom Fahrerplatz aus betätigbar sind.

9. Notausstieg nach einem oder mehreren der Ansprüche 1 bis 8, dadurch gekennzeichnet, daß über eine Servoeinrichtung, z. B. Hydraulikzylinder, das Heckfenster (2) auch gegen erhebliche Widerstände durch leichte Betätigung des Zugbügels in die Öffnungsrichtung bringbar ist, wobei auch die Heckklappe in Schrägstellung geht.

10. Notausstieg nach einem oder mehreren der Ansprüche 1 bis 9, dadurch gekennzeichnet, daß die das Heckfenster (2) haltenden Dichtlippen durch Betätigung des Zugbügels (4) abreißbar sind und somit das Fenster abwerfbar ist.

## Revendications

1. Issue de secours arrière d'autobus comportant un moteur disposé à l'arrière ainsi qu'un volet arrière (3) placé sous la glace arrière (2) et fermant le compartiment du moteur, caractérisée en ce que la glace arrière (2) peut être déverrouillée et aménée dans de état d'ouverture, le volet arrière (3) du compartiment du moteur pouvent, en fonction de cela, pivoter vers l'extérieur dans une position oblique par rapport à l'ouverture de glace (10).

2. Issue de secours selon la revendication 1, caractérisée en ce que le pivotement simultané et automatique d'ouverture du volet arrière (3) est lié à l'ouverture de la place arrière (2).

3. Issue de secours selon la revendication 1 ou 2, caractérisée en ce que la place arrière (2) comporte un étrier de traction (4).

4. Issue de secours-selon les revendications 1 à 3, caractérisée en ce que l'étrier de traction (4) est plombé contre une ouverture injustifiée.

5. Issue de secours selon l'une ou plusieurs des revendications 1 à 4, caractérisée en ce qu'un commutateur électrique (5) est actionné lors de l'ouverture de la glace arrière, ce commutateur étant reliée à une électrovanne (6) qui est à sont tour branchée sur un élément de manoeuvre (7), par exemple un vérin hydraulique ou pneumatique disposé entre la paroi (8) de l'autobus et le volet arrière (3).

6. Issue de secours selon l'une ou plusieurs des revendications 1 à 5, caractérisée en ce que la position d'ouverture de la glace arrière (2) est rendue visible au siège de conduite par un signal optique ou acoustique.

7. Issue de secours selon l'une ou plusieurs des revendications 1 à 6, caractérisée en ce que la glace arrière (2) et le volet arrière (3) sont actionnés automatiquement dans le sens de la sécurité au moyen d'un détecteur thermique lors du dépassement d'une température excédant la température climatique maximale.

8. Issue de secours selon l'une ou plusieurs des revendications 1 à 7, caractérisée en ce que l'ouverture de la glace arrière (2) et la position oblique du volet arrière (3) peuvent être commandées à partir du siège de conduite.

9. Issue de secours selon l'une ou plusieurs des revendications 1 à 8, caractérisée en ce qu'au moyen d'un servomécanisme, par exemple d'un vérin hydraulique, la glace arrière (2) peut être commandée dans le sens d'ouverture, même contre des résistances considérables, par manoeuvre légère de l'étrier de traction, le volet arrière se déplaçant également en position oblique.

10. Issue de secours selon l'une ou plusieurs des revendications 1 à 9, caractérisée en ce que les joints d'étanchéité maintenant la glace arrière (2) peuvent être déchirés en actionnant l'étrier de traction (4), la glace pouvant ainsi être éjectée.

**Claims**

1. Emergency exit at rear of buses which have an engine positioned at the rear and a rear flap (3) below the rear window (2) to close up the engine compartment (2), characterised by the fact that the rear window (2) can be unlocked and brought into an open position and, dependently of this, the rear flap (3) of the engine compartment can be swung outwards to a sloping position towards the window opening (10).

2. Emergency exit as under Claim 1, characterised by the fact that the opening of the rear window (2) is linked so a simultaneous and automatic swinging out of the rear flap (3).

3. Emergency exit as under Claim 1 or Claim 2, characterised by the fact that the rear window (2) has a pull bar (4).

4. Emergency exit as under Claims 1 to 3, characterised by the fact the pull bar (4) is lead-sealed to prevent unauthorised opening.

5. Emergency exit as under one or more of Claims 1 to 4, characterised by the fact that when the rear window (2) is opened an electric switch (5) is actuated which is linked to a solenoid vlave (6), which is in turn connected to an actuator (7), e.g. a hydraulic or pneumatic cylinder located between the wall (8) of the bus and the rear flap (3).

6. Emerngecy exit as under one or more of Claims 1 to 5, characterised by the fact that open position of the rear window (2) can be recognised at the driver's station by means of an visual or acoustic signal.

7. Emergency exit as under one or more of Claims 1 to 6, characterised by the fact that the rear window (2) and rear flap (3) are for safety reasons actuated automatically via a heat sensor if the temperature exceeds thx maximum climatic temperature.

8. Emergency exit as under one or more of claims 1 to 7, characterised by the fact that the opening of the rear window (2) and the movement of the rear flap (3) to a sloping position can be actuated from the driver's station.

9. Emergency exit as under one or more of Claims 1 to 8, characterised by the fact that via a servo device, e.g. a hydraulic cylinder, the rear window (2) can be brought into the direction of opening, even against considerable resistance, by slight actuation of the pull bar, whereby the rear flap also moves to a sloping position.

10. Emergency exit as under one or more of Claims 1 to 9, characterised by the fact that the sealing lips holding the rear window (2) can be pulled off when the pull bar (4) is actuated, the window thus being jettisonable.

Fig. 1